(19) Europäisches Patentamt
European Patent Office
Office européen des brevets

(11) Veröffentlichungsnummer: **0 688 743 A2**

(12) # EUROPÄISCHE PATENTANMELDUNG

(21) Anmeldenummer: **95108808.7**

(22) Anmeldetag: **08.06.95**

(51) Int. Cl.6: **C04B 16/06**, D06M 15/227, D06M 15/507, D06M 15/59, D01F 6/80, //D06M101:36

(30) Priorität: **21.06.94 DE 4421650**

(43) Veröffentlichungstag der Anmeldung: **27.12.95 Patentblatt 95/52**

(84) Benannte Vertragsstaaten: **CH DE ES FR GB IE IT LI NL**

(71) Anmelder: **HOECHST AKTIENGESELLSCHAFT**
**Brüningstrasse 50**
**D-65929 Frankfurt am Main (DE)**

(72) Erfinder: **Neuert, Richard, Dr.**
**Brunnerweg 2**
**D-90610 Winkelhaid (DE)**
Erfinder: **Jung, Holger, Dr.**
**Feldbergblick 8**
**D-65527 Niedernhausen (DE)**

(54) **Formkörper enthaltend Garne oder Bänder aus Fasern aus aromatischen Polyamiden, Garne oder Bänder aus aromatischen Polyamiden, sowie Verwendung dieser Garne zur Verstärkung von Polymerbeton oder von hydraulisch oder an der Luft abbindenden Materialien**

(57) Beschrieben werden faserverstärkte Formkörper enthaltend hydraulische Bindemittel, Luftbindemittel oder Polymerbeton und als Verstärkungsmaterial parallel oder zwei- oder dreidimensional angeordnete Garne und/oder Bänder des Titers von mehr als 440 dtex aus Fasern von in polaren aprotischen organischen Lösungsmitteln löslichen aromatischen Polyamiden enthaltend die wiederkehrenden Struktureinheiten der Formeln I, II und gegebenenfalls III

$-OC-Ar^1-CO-NH-Ar^2-NH-$ (I),

$-OC-Ar^1-CO-NH-Ar^3-NH-$ (II),

$-OC-Ar^1-CO-NH-Ar^4-NH-$ (III),

worin $Ar^1$, $Ar^2$, $Ar^3$ und $Ar^4$ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden.

Ferner werden Garne oder Bänder des Titers von mehr als 440 dtex aus Fasern aus den oben definierten aromatischen Polyamiden beschrieben, welche 2 bis 25 Gew. %, vorzugsweise 3 bis 10 Gew. %, bezogen auf das Gewicht des Garns oder des Bandes, eines duroplastischen oder thermoplastischen Polymeren als Fixierungsmittel enthalten.

EP 0 688 743 A2

Die vorliegende Erfindung betrifft mit Fasern aus aromatischen Polyamiden verstärkte Formkörper aus hydraulischen Bindemitteln und/oder Luftbindemitteln, Verfahren zur Herstellung dieser Formkörper, sowie die Verwendung von Aramidgarnen oder -bändern zur Verstärkung derartiger Formkörper.

Aromatische Polyamide (Aramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Bei der Bewehrung von Beton werden vorzugsweise Flechtwerke aus Stahlstäben, die im Formkörper die Zugkräfte aufnehmen sollen, verwendet. Die Druckkräfte werden von der Betonmatrix aufgenommen. Beim Einsatz von Stahl sind die Korrosionsanfälligkeit und das hohe Gewicht von Nachteil.

Der Einsatz von Aramiden zur Bewehrung von Betonbauten ist bereits bekannt. So wird in de DE-A-3,341,342 vorgeschlagen, Synthesefasern oder Gewebebahnen aus derartigen Polymeren für derartige Zwecke einzusetzen. Die Bewehrung kann sowohl in Form eines Mattengeflechts als auch in Form von Stangen zum Einsatz kommen. Nähere Hinweise auf die Art des einzusetzenden Aramids sind dieser Schrift nicht zu entnehmen.

In der DE-A-3,703,974 wird der Einsatz von Faserwerkstoffen als Ankerelement im Grund- oder Bergbau oder als Bewehrungselement für Beton, wie als Spannglied für Spannbeton, vorgeschlagen.

Die EP-A-170,499 beschreibt ein Verstärkungselement für die Betonverstärkung aus einer Vielzahl aus Stäben aus faserförmigem Material, das mit härtbarem Material imprägniert und durch Pultrusion verformt wurde und das mit einem Band umwunden anschließend ausgehärtet wurde.

Ferner sind bereits stabförmige Verstärkungsmaterialien auf der Basis von Aramidfasern bekannt geworden, die mit einer faserförmigen Ummantelung helixartig umwunden sind. Derartige Materialien sind z.B. aus der EP-A-199,348 und der US-A-4,620,401 bekannt.

Ferner sind aus der EP-A-206,591 Materialien für die Betonverstärkung bekannt geworden, die aus miteinander verflochtenen Zwirnen bestehen, welche mit einem Bindemittel imprägniert worden sind.

Es ist bekannt, daß Fäden oder Fasern aus Polyaramiden mit hoher Festigkeit und hohem Anfangsmodul hergestellt werden können, wenn die Amidbindungen an den aromatischen Kernen koaxial oder nahezu parallel zueinander orientiert sind, wodurch starre, stäbchenförmige Polymermoleküle entstehen. Ein typisches Polyamid dieser Art ist beispielsweise Poly-(p-phenylenterephthalamid).

Neben derartigen aromatischen Polyamiden, die infolge ihrer Unlöslichkeit in polaren organischen Lösungsmitteln schwierig herzustellen und zu verarbeiten sind, wurden Copolyamide entwickelt, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen. Beispiele für derartige aromatische Copolyamide finden sich in der DE-PS-2,556,883, in der DE-A-3,007,063, und in den EP-A-199,090, EP-A-364,891, EP-A-364,892, EP-A-364,893 und EP-A-424,860 beschrieben.

Es wurde jetzt gefunden, daß sich Garne aus derartigen Copolyamiden sehr gut zur Verstärkung von Formkörpern aus hydraulischen Bindemitteln, Luftbindemitteln, wie Beton oder Mörtel, oder aus Polymerbeton einsetzen lassen.

Dabei kann die bislang beim Einsatz von Aramiden übliche Schutzschicht gegenüber Abbau des Aramids in alkalischer Umgebung entfallen, da die erfindungsgemäß einzusetzenden Garne oder Bänder sich durch eine gute Alkalibeständigkeit auszeichnen.

Ferner wurde gefunden, daß sich derartige Garne ohne die bislang üblichen helixartig angebrachten Umwindungsmittel in die Formkörper eingelagert werden können, da die Haftung zwischen Matrix und Faser außerordentlich groß ist.

Die vorliegende Erfindung betrifft faserverstärkte Formkörper enthaltend hydraulische Bindemittel, Luftbindemittel oder Polymerbeton und als Verstärkungsmaterial parallel oder zwei- oder dreidimensional angeordnete Garne und/oder Bänder des Titers von mehr als 440 dtex aus Fasern von in polaren aprotischen organischen Lösungsmitteln löslichen aromatischen Polyamiden enthaltend die wiederkehrenden Struktureinheiten der Formeln I und II

$-OC-Ar^1-CO-NH-Ar^2-NH-$ (I),

$-OC-Ar^1-CO-NH-Ar^3-NH-$ (II),

worin $Ar^1$, $Ar^2$ und $Ar^3$ unabhängig voneinander einen zweiwertigen ein- oder mehrkernigen aromatischen Rest darstellen, dessen freie Valenzen sich in para-Stellung oder in meta-Stellung oder in einer zu diesen

Stellungen vergleichbaren parallelen, koaxialen oder gewinkelten Stellung zueinander befinden, und $Ar^2$ und $Ar^3$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und vorzugsweise isotrope Lösungen bildendes aromatisches Polyamid ergibt.

Bei den in den erfindungsgemäßen Formkörpern einzusetzenden Polymeren handelt es sich um Aramide, die zu einem wesentlichen Anteil aus para-aromatischen Monomeren aufgebaut sind, und die in polaren aprotischen organischen Lösungsmitteln löslich sind.

Unter löslichem aromatischen Polyamid ist im Rahmen dieser Erfindung ein aromatisches Polyamid zu verstehen, daß bei 25 °C eine Löslichkeit in N-Methylpyrrolidon von mindestens 50 g/l aufweist.

Vorzugsweise enthält das polare aprotische organische Lösungsmittel zumindest ein Lösungsmittel vom Amidtyp, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff. Für das erfindungsgemäße Verfahren sind die bevorzugten organischen Lösungsmittel N-Methyl-2-pyrrolidon, N,N-Dimethylacetamid und eine Mischung dieser Verbindungen.

Bei den erfindungsgemäß einzusetzenden aromatischen Polyamiden handelt es sich um Verbindungen, die in polaren aprotischen organischen Lösungsmitteln unter der Ausbildung isotroper Lösungen löslich sind und die mindestens zwei, insbesondere drei verschiedene sich in den Diamineinheiten unterscheidende wiederkehrende Struktureinheiten gemäß der obigen Definition aufweisen.

Bedeuten irgendwelche Reste zweiwertige aromatische Reste, deren Valenzbindungen sich in para- oder in vergleichbarer koaxialer oder paralleler Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über -CO-NH- Gruppen linear miteinander verbunden sein.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallel, entgegegesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylen.

Bedeuten irgendwelche Reste zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie z.B. -O-, $-CH_2-$, -S-, -CO- oder $-SO_2-$ miteinander verbunden sein.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Geringere Anteile, beispielsweise bis zu 5 Mol % der Monomereinheiten, bezogen auf das Polymere, können aliphatischer oder cycloaliphatischer Natur sein, beispielsweise Alkylen- oder Cycloalkyleneinheiten darstellen.

Unter Alkylenresten ist verzweigtes und insbesondere geradkettiges Alkylen zu verstehen, beispielsweise Alkylen mit zwei bis vier Kohlenstoffatomen, insbesondere Ethylen.

Unter Cycloalkylenresten sind beispielsweise Reste mit fünf bis acht Kohlenstoffatomen zu verstehen, insbesondere Cyclohexylen.

Alle diese aliphatischen, cycloaliphatischen oder aromatischen Reste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, insbesondere Methyl.

Unter Alkoxyresten ist verzweigtes und insbesondere geradkettiges Alkoxy zu verstehen, beispielsweise Alkoxy mit ein bis sechs Kohlenstoffatomen, insbesondere Methoxy.

Bedeuten irgendwelche Reste Halogen, so handelt es sich dabei beispielsweise um Fluor, Brom oder insbesondere um Chlor.

Bevorzugt verwendet man aromatische Polyamide auf der Basis von unsubstituierten Resten.

Als Dicarbonsäureeinheit in den aromatischen Polyamiden enthaltend die wiederkehrenden Struktureinheiten der Formeln I, II und gegebenenfalls III setzt man vorzugsweise Terephthalsäureeinheiten ein.

In den bevorzugten Formkörpern werden besonders Garne aus Fasern aus solchen aromatischen Copolyamide eingesetzt, die die wiederkehrenden Struktureinheiten der Formeln III und IV oder der Formeln III und VI oder der Formeln III, IV und V oder der Formeln III, IV und VI oder der Formeln IV, V und VI enthalten

$-OC-Ar^1-CO-NH-Ar^4-NH-$ (III),

$-OC-Ar^1-CO-NH-Ar^5-Q-Ar^6-NH-$ (IV),

$-OC-Ar^1-CO-NH-Ar^7-Y-Ar^8-NH-$ (V),

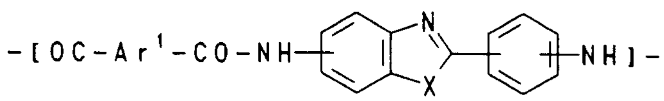

(VI),

worin $Ar^1$ und $Ar^4$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, insbesondere einkernige oder zweikernige aromatische Reste sind,

$Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellen kann, dessen freie Valenzen sich in meta-Stellung oder in einer zu dieser Stellung vergleichbaren gewinkelten Stellung zueinander befinden,

Q eine direkte C-C-Bindung oder eine Gruppe der Formel -O-, -S-, $-SO_2-$, -O-Phenylen-O- oder Alkylen ist,

$Ar^7$ und $Ar^8$ eine der für $Ar^5$ und $Ar^6$ definierten Bedeutungen annehmen,

Y eine der für Q definierten Bedeutungen annimmt oder zusätzlich eine Gruppe der Formel -HN-CO- bedeuten kann, und

X eine Gruppe der Formel -O-, -S- oder insbesondere $-NR^1-$ bedeutet, worin $R^1$ Alkyl, Cycloalkyl, Aryl, Aralkyl oder insbesondere Wasserstoff ist.

Besonders bevorzugt werden Formkörper enthaltend Garne aus Fasern aus aromatischen Copolyamiden mit den wiederkehrenden Struktureinheiten der Formeln III, IV und V, worin $Ar^1$ 1,4-Phenylen ist, $Ar^4$ 1,4-Phenylen oder ein zweiwertiger Rest des 4,4'-Diaminobenzanilids ist, $Ar^5$, $Ar^6$ und $Ar^7$ 1,4-Phenylen darstellen, $Ar^8$ 1,3-Phenylen bedeutet, Q -O-1,4-Phenylen-O- ist und Y -O- ist; dabei werden diejenigen aromatischen Copolyamide besonders bevorzugt eingesetzt, bei denen sich die Mengenanteile der wiederkehrenden Struktureinheiten der Formeln III, IV und V sich innerhalb folgender Bereiche, bezogen auf die Gesamtmenge dieser Struktureinheiten, bewegen:

wiederkehrende Struktureinheit der Formel III: 40-60 Mol%,
wiederkehrende Struktureinheit der Formel IV: 1-20 Mol%, und
wiederkehrende Struktureinheit der Formel V: 15-40 Mol%.

Ebenfalls besonders bevorzugt werden Formkörper enthaltend Garne aus Fasern aus aromatischen Copolyamiden mit den wiederkehrenden Struktureinheiten der Formeln III, IV und V, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl-, methoxy- oder chlorsubstituiertens 1,4-Phenylen bedeuten, Q -O-1,4-Phenylen-O- ist und Y eine direkte C-C-Bindung ist; dabei werden diejenigen aromatischen Copolyamide besonders bevorzugt eingesetzt, bei denen sich die Mengenanteile der wiederkehrenden Struktureinheiten der Formeln III, IV und V sich innerhalb folgender Bereiche, bezogen auf die Gesamtmenge dieser Struktureinheiten, bewegen:
wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

Ebenfalls besonders bevorzugt werden Formkörper enthaltend Garne aus Fasern aus aromatischen Copolyamiden mit den wiederkehrenden Struktureinheiten der Formeln III, IV und V, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl-, methoxy- oder chlorsubstituiertens 1,4-Phenylen bedeuten, Q -O- ist und Y eine direkte C-C-Bindung ist; dabei werden diejenigen aromatischen Copolyamide besonders bevorzugt eingesetzt, bei denen sich die Mengenanteile der wiederkehrenden Struktureinheiten der Formeln III, IV und V sich innerhalb folgender Bereiche, bezogen auf die Gesamtmenge dieser Struktureinheiten, bewegen:
wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

Ebenfalls besonders bevorzugt werden Formkörper enthaltend Garne aus Fasern aus aromatischen Copolyamiden mit den wiederkehrenden Struktureinheiten der Formeln III und IV, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,3-Phenylen ist und Q -O- ist; dabei werden diejenigen aromatischen Copolyamide besonders bevorzugt eingesetzt, bei denen sich die Mengenanteile der wiederkehrenden Struktureinheiten der Formeln III und IV sich innerhalb folgender Bereiche, bezogen auf die Gesamtmenge dieser Struktureinheiten, bewegen:
wiederkehrende Struktureinheit der Formel III: 20-50 Mol%, und
wiederkehrende Struktureinheit der Formel IV: 40-60 Mol%.

Ebenfalls besonders bevorzugt werden Formkörper enthaltend Garne aus Fasern aus aromatischen Copolyamiden mit den wiederkehrenden Struktureinheiten der Formeln III und VI, worin $Ar^1$ 1,4-Phenylen ist, $Ar^4$ 1,4-Phenylen oder ein zweiwertiger Rest des 4,4'-Diaminobenzanilids ist und X -NH- bedeutet; dabei werden diejenigen aromatischen Copolyamide besonders bevorzugt eingesetzt, bei denen sich die Mengenanteile der wiederkehrenden Struktureinheiten der Formeln III und VI sich innerhalb folgender Bereiche, bezogen auf die Gesamtmenge dieser Struktureinheiten, bewegen:
wiederkehrende Struktureinheit der Formel III: 30 - 70 Mol%, und
wiederkehrende Struktureinheit der Formel VI: 70 - 30 Mol%.

Ebenfalls besonders bevorzugt werden Formkörper enthaltend Garne aus Fasern aus aromatischen Copolyamiden mit den wiederkehrenden Struktureinheiten der Formeln III, IV und VI, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,4- oder 1,3-Phenylen ist, Q -O- oder -O-1,4-Phenylen-O- bedeutet und X -NH-ist; dabei werden diejenigen aromatischen Copolyamide besonders bevorzugt eingesetzt, bei denen sich die Mengenanteile der wiederkehrenden Struktureinheiten der Formeln III, IV und VI sich innerhalb folgender Bereiche, bezogen auf die Gesamtmenge dieser Struktureinheiten, bewegen:
wiederkehrende Struktureinheit der Formel III: 10 - 30 Mol%,
wiederkehrende Struktureinheit der Formel IV: 10 - 40 Mol%, und
wiederkehrende Struktureinheit der Formel VI: 50 - 70 Mol%.

Ebenfalls besonders bevorzugt werden Formkörper enthaltend Garne aus Fasern aus aromatischen Copolyamiden mit den wiederkehrenden Struktureinheiten der Formeln IV, V und VI, worin $Ar^1$ 1,4-Phenylen ist, $Ar^5$ 1,4-Phenylen ist, $Ar^6$ 1,4- oder 1,3-Phenylen ist, Q -O- oder -O-1,4-Phenylen-O- bedeutet, $Ar^7$ und $Ar^8$ methyl-, methoxy- oder chlorsubstituiertes 1,4-Phenylen sind, Y eine direkte C-C-Bindung bedeutet und X -NH- ist; dabei werden diejenigen aromatischen Copolyamide besonders bevorzugt eingesetzt, bei denen sich die Mengenanteile der wiederkehrenden Struktureinheiten der Formeln IV, V und VI sich innerhalb folgender Bereiche, bezogen auf die Gesamtmenge dieser Struktureinheiten, bewegen:
wiederkehrende Struktureinheit der Formel IV: 10 - 40 Mol%,
wiederkehrende Struktureinheit der Formel V: 30 - 60 Mol%, und
wiederkehrende Struktureinheit der Formel VI: 50 - 70 Mol%.

Beispiele für bevorzugte Diaminkombinationen, die diesen bevorzugten wiederkehrenden Struktureinheiten der Formeln III und IV oder der Formeln III und VI oder der Formeln III, IV und V oder der Formeln III, IV und VI zugrundeliegen, sind 1,4-Phenylendiamin und 3,4'-Diaminodiphenylether; 1,4-Phenylendiamin, 4,4'-Diaminodiphenylmethan und 3,3'-Dichlor-, 3,3'-Dimethyl- oder 3,3'-Dimethoxybenzidin; sowie 1,4-Phenylendiamin, 1,4-Bis-(aminophenoxy)-benzol und 3,3'-Dichlor-, 3,3'-Dimethyl- oder 3,3'-Dimethoxybenzidin; sowie 1,4-Phenylendiamin, 3,4'-Diaminodiphenylether und 3,3'-Dichlor-, 3,3'-Dimethyl- oder 3,3'-Dimethoxybenzidin; sowie 1,4-Phenylendiamin, 3,4'-Diaminodiphenylether und 4,4'-Diaminobenzanilid; sowie 1,4-Phenylendiamin, 1,4-Bis-(aminophenoxy)-benzol und 3,4'-Diaminodiphenylether; sowie 1,4-Phenylendiamin und 5(6)-Amino-2-(para-aminophenyl)-benzimidazol; sowie 1,4-Phenylendiamin, 5(6)-Amino-2-(para-aminophenyl)-benzimidazol und 3,3'-Dichlor-, 3,3'-Dimethyl- oder 3,3'-Dimethoxybenzidin; sowie 1,4-Phenylendiamin, 5(6)-Amino-2-(para-aminophenyl)-benzimidazol und 3,4'-Diaminodiphenylether; sowie 3,3'-Dichlor-, 3,3'-Dimethyl- oder 3,3'-Dimethoxybenzidin, 5(6)-Amino-2-(para-aminophenyl)-benzimidazol und 1,4-Bis-(aminophenoxy)-benzol; sowie 5(6)-Amino-2-(para-aminophenyl)-benzimidazol, 3,3'-Dichlor-, 3,3'-Dimethyl- oder 3,3'-Dimethoxybenzidin und 3,4'-Diaminodiphenylether; sowie 1,4-Phenylendiamin 5(6)-Amino-2-(para-aminophenyl)-benzimidazol und 1,4-Bis-(aminophenoxy)-benzol.

Aramide, die sich von solchen Diaminkombinationen ableiten und die sich bevorzugt gemäß der vorliegenden Erfindung einsetzen lassen, sind zum Teil in den EP-A-199,090, EP-A-364,891, EP-A-364,892, EP-A-364,893 und EP-A-424,860 beschrieben.

Die erfindungsgemäß einzusetzenden aromatischen Polyamide sind an sich bekannt.

Die Polykondensation und die Herstellung von Fasern aus den erfindungsgemäß einzusetzenden Coaramiden erfolgt nach an sich bekannten Verfahren, wie diese z.B. in den oben aufgeführten Schriften beschrieben worden sind.

Die erfindungsgemäß einzusetzenden Coaramide weisen ein für die Faserherstellung ausreichendes Molekulargewicht aus. Eine ausreichende Molekül-Kettenlänge der erfindungsgemäß einzusetzenden Coaramide liegt beispielsweise vor, wenn die Viskosität der bei der Polykondensation erhalten Polymerlösung einer inhärenten Viskosität des Polymers von mehr als 2,5 dl/g, vorzugsweise 2,5 bis 7,0 dl/g, entspricht.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wird für die Zwecke der vorliegenden Erfindung bestimmt an 0,25 %igen Lösungen von Polymer in N-Methylpyrrolidon bei 25 °C.

Der Begriff "Fasern" ist im Rahmen dieser Erfindung in seiner breitesten Bedeutung zu verstehen; dazu zählen also zum Beispiel Stapelfasern oder insbesondere Filamente beliebiger Titer.

Die erfindungsgemäß einzusetzenden Garne und/oder Bänder zeichnen sich durch ausgezeichnete mechanische Eigenschaften, wie hohe Reißfestigkeiten und Anfangsmoduli und niedrige Reißdehnungen, sowie durch die oben erwähnten günstigen Anwendungs- und Weiterverarbeitungseigenschaften aus.

Die erfindungsgemäß einzusetzenden Fasern weisen vorzugsweise Einzelfilamenttiter von größer gleich 0,6 dtex, insbesondere von 1 bis 20 dtex, auf.

Die Zugfestigkeit der erfindungsgemäß einzusetzenden Garne oder Bänder beträgt vorzugsweise 150 bis 300 cN/tex.

Der Anfangsmodul, bezogen auf 100 % Dehnung, der erfindungsgemäß einzusetzenden Garne oder Bänder beträgt vorzugsweise 20 bis 120 N/tex.

Die Querschnittsform der Einzelfilamente der erfindungsgemäß einzusetzenden Garne oder Bänder kann beliebig sein, beispielsweise dreieckig, tri- oder multilobal oder insbesondere elliptisch oder rund.

Die erfindungsgemäß einzusetzenden Garne bestehen vorzugsweise aus Multifilamenten. Das gilt sinngemäß auch für die erfindungsgemäß einzusetzenden Bänder.

Der Titer dieser Garne beträgt vorzugsweise 440 bis 80000 dtex.

Die erfindungsgemäß zu verwendenden Garne oder Bänder können als solche, gegebenenfalls mit einer Präparation beaufschlagt, zur Herstellung der Formkörper zum Einsatz kommen oder diese Garne oder Bänder enthalten 2 bis 25 Gew.%, vorzugsweise 3 bis 10 Gew.%, bezogen auf das Gewicht des Garns oder des Bandes, eines duroplastischen oder thermoplastischen Polymeren als Fixierungsmittel.

Garne oder Bänder enthaltend 2 bis 25 Gew. %, vorzugsweise 3 bis 10 Gew. %, bezogen auf das Gewicht des Garns oder des Bandes, eines duroplastischen oder thermoplastischen Polymeren als Fixierungsmittel sind ebenfalls ein Gegenstand der vorliegenden Erfindung.

Sollen die Garne oder Bänder als solche zur Herstellung der Formkörper zum Einsatz kommen, so werden vorzugsweise Multifilamentgarne eingesetzt. Diese werden vorzugsweise ungedreht oder mit einem

Schutzdrall von bis zu 140 T/m versehen eingesetzt.

Bei den als Fixierungsmittel eingesetzten duroplastischen oder thermoplastischen Polymeren kann es sich um beliebige Polymere handeln. Beispiele für duroplastische Polymere sind Epoxidharze, ungesättigte Polyesterharze, Phenolharze und Polyurethane. Beispiele für thermoplastische Polymere sind gesättigte Polyesterharze, insbesondere Polyethylenterephthalat, Polyamide mit aliphatischen Diamineinheiten, oder Polyolefine, insbesondere Polyethylen.

Die Fixierungsmittel können durch Tränken der Aramidgarne oder -bänder mit dem härtbaren duroplastischen Polymeren, anschließende Trocknung und thermische Nachbehandlung (Härten des duroplastischen Polymeren) aufgebracht werden. Dazu kann eine Vielzahl von Endlosfilamenten von einem Spulengatter durch eine Formgebungseinheit (z.B. Ringdüse oder Spalt) geleitet werden, um das Garn oder Band zu formen; anschließend kann dieses Garn oder Band durch eine Tränkwanne geleitet werden, welche das Fixierungsmittel enthält; nach dem Verlassen dieser Tränkwanne wird das harzgetränkte Garn oder Band gegebenenfalls abgequetscht, um überschüssiges Fixierungsmittel zu entfernen und anschließend wird das getränkte Garn oder Band einer Wärmebehandlung unterworfen, um gegebenenfalls vorhandenes Lösungsmittel zu entfernen und um das Fixierungsmittel zu härten.

Beim Einsatz von thermoplastischen Polymeren als Fixierungsmittel können beispielsweise Fasern aus thermoplastischen Polymeren zusammen mit den erfindungsgemäß einzusetzenden Fasern aus aromatischen Polyamiden in Form eines Garns oder eines Bandes hergestellt werden; anschließend wird das Garn oder Band erhitzt, so daß das thermoplastische Polymere die Fasern aus aromatischen Polyamiden umfließt und diese fixiert. Beispiele für geeignete thermoplastische Polymere zum Fixieren der Garne oder Bänder sind Polyamide, Polyethylenterephthalat oder Polybutylenterephthalat.

Die erfindungsgemäß einzusetzenden gegebenenfalls Fixierungsmittel enthaltende Garne besitzen üblicherweise einen runden Querschnitt; typische Durchmesser liegen im Bereich von 0,3 bis 16 mm.

Die erfindungsgemäß einzusetzenden gegebenenfalls Fixierungsmittel enthaltende Bänder besitzen üblicherweise eine Dicke von etwa 0,3 bis 2 mm und eine Breite von etwa 1 bis 35 mm.

Das Matrixmaterial des erfindungsgemäßen Formkörpers enthält hydraulische Bindemittel und/oder Luftbindemittel. Darunter sind organische oder insbesondere anorganische Bindemittel zu verstehen, die durch den Zutritt von Wasser oder Luft erhärten.

Derartige Bindemittel werden hauptsächlich in Pulverform oder als Pasten eingesetzt und verfestigen sich in der Folge steinartig infolge von chemischen oder physikalischen Reaktionen, wie Hydration, Carbonatbildung oder Kristallisation.

Neben diesen Bindemitteln werden bei der Herstellung der erfindungsgemäßen Formkörper übicherweise Füllmaterialien, wie Sand oder Kies, eingesetzt.

Beispiele für bevorzugte erfindungsgemäß einzusetzende hydraulische Bindemittel sind Zemente, Mischbinder, Putz- oder Mauerbinder sowie hydraulisch erhärtende Kalke.

Beispiele für erfindungsgemäß einzusetzende Luftbindemittel sind Luftkalke, Baugipse, Anhydritbinder oder Magnesitbinder.

Das Matrixmaterial des erfindungsgemäßen Formkörpers kann auch Polymerbeton enthalten.

Unter Polymerbeton sind hochgefüllte polymere Werkstoffe mit einem hohen Feststoffgehalt, beispielsweise von etwa 95 Gew.% zu verstehen. Dazu zählen beispielsweise gefüllte Werkstoffe auf der Basis von härtbaren Harzen, insbesondere von Epoxidharzen oder von ungesättigten Polyesterharzen. Die anorganischen Füllstoffe bestehen in der Regel aus einer Mischung abgestufter Korngrößen zum Erreichen einer möglichst dichten Packung. Trotz des hohen Füllstandes werden die Eigenschaften des Polymerbetons sowohl während der Verarbeitung als auch nach der Vernetzung sehr stark von der Art und Menge des eingesetzten Polymeren beeinflußt. Eine gezielte Veränderung der Eigenschaften der Formkörper aus Polymerbeton kann durch das Einbringen von Aramidgarnen im Lieferzustand oder durch das Integrieren von Bändern vor der Vernetzung der Matrix erfolgen.

Die Herstellung der erfindungsgemäßen faserverstärkten Formkörper kann nach unterschiedlichen Techniken erfolgen.

Handelt es sich beispielsweise um fixierte Garne oder Bänder, so können diese in gewünschter Länge vorgelegt und in paralleler Anordnung in das pulverförmige oder mit Wasser angepastete hydraulische Bindemittel und/oder Luftbindemittel eingelegt werden. Dieser Vorgang wird vorzugsweise mehrfach wiederholt, so daß Schichten parallelliegender Garne und/oder Bänder im Formkörper entstehen.

Der Abstand der einzelnen parallel angeordneten Garne oder Bänder voneinander kann in Abhängigkeit vom jeweils beabsichtigten Einsatzgebiet in weiten Bereichen schwanken. Typische Abstände betragen 0,1 bis 1,0 cm. Die Abstände der einzelnen Schichten von parallel angeordneten Garnen oder Bändern betragen typischerweise 0,1 bis 1,0 cm. Die Ausrichtung der Garne oder Bänder in den einzelnen Schichten des Formkörpers kann unterschiedlich sein.

In zweidimensionaler Anordnung können die Garne und/oder Bänder in der Form von textilen Flächengebilden zum Einsatz kommen, beispielsweise in der Form von Geweben, Gelegen, Netzen, Gestricken oder Gewirken.

In dreidimensionaler Anordnung können die Garne und/oder Bänder in der Form von dreidimensionalen Gebilden auf der Basis von textilen Materialien zum Einsatz kommen, beispielsweise in der Form von Netzwerkstoffen, wie z.B. in der EP-A-158,234 beschrieben.

Die Erfindung betrifft auch die Verwendung der oben beschriebenen Garne und Bänder zur Herstellung von Formkörpern.

Die erfindungsgemäßen Formkörper lassen sich auf den Gebieten der Zugentlastung bzw. der Bewehrung von Betonbauteilen, bei denen eine signifikante Gewichtseinsparung, sehr hohe Festigkeit und Korrosionsbeständigkeit im Vergleich zu Stahl zugrunde gelegt werden muß, einsetzen. Die Erfindung betrifft auch die Verwendung der oben definierten Garne und/oder Bänder für diese Zwecke.

**Patentansprüche**

1. Faserverstärkte Formkörper enthaltend hydraulische Bindemittel, Luftbindemittel oder Polymerbeton und als Verstärkungsmaterial parallel oder zwei- oder dreidimensional angeordnete Garne und/oder Bänder des Titers von mehr als 440 dtex aus Fasern von in polaren aprotischen organischen Lösungsmitteln löslichen aromatischen Polyamiden enthaltend die wiederkehrenden Struktureinheiten der Formeln I und II

   $-OC-Ar^1-CO-NH-Ar^2-NH-$ (I),

   $-OC-Ar^1-CO-NH-Ar^3-NH-$ (II),

   worin $Ar^1$, $Ar^2$ und $Ar^3$ unabhängig voneinander einen Zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und $Ar^2$ und $Ar^3$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und vorzugsweise isotrope Lösungen bildendes aromatisches Polyamid ergibt.

2. Faserverstärkte Formkörper nach Anspruch 1, dadurch gekennzeichnet, daß Fasern aus solchen aromatischen Copolyamiden eingesetzt werden, die die wiederkehrenden Struktureinheiten der Formeln III und IV oder der Formeln III und VI oder der Formeln III, IV und V oder der Formeln III, IV und VI oder der Formeln IV, V und VI enthalten

   $-OC-Ar^1-CO-NH-Ar^4-NH-$ (III),

   $-OC-Ar^1-CO-NH-Ar^5-Q-Ar^6-NH-$ (IV),

   $-OC-Ar^1-CO-NH-Ar^7-Y-Ar^8-NH-$ (V),

   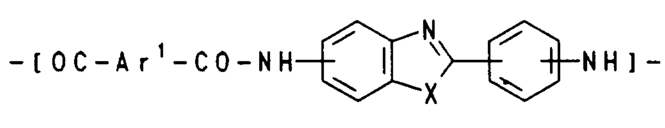
   (VI),

   worin $Ar^1$ und $Ar^4$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, insbesondere einkernige oder zweikernige aromatische Reste sind,
   $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellen kann, dessen freie Valenzen sich in meta-Stellung

oder in einer zu dieser Stellung vergleichbaren gewinkelten Stellung zueinander befinden,
Q eine direkte C-C-Bindung oder eine Gruppe der Formel -O-, -S-, $-SO_2-$, -O-Phenylen-O- oder Alkylen ist,
$Ar^7$ und $Ar^8$ eine der für $Ar^5$ und $Ar^6$ definierten Bedeutungen annehmen,
Y eine der für Q definierten Bedeutungen annimmt oder zusätzlich eine Gruppe der Formel -HN-CO- bedeuten kann, und
X eine Gruppe der Formel -O-, -S- oder insbesondere $-NR^1-$ bedeutet, worin $R^1$ Alkyl, Cycloalkyl, Aryl, Aralkyl oder insbesondere Wasserstoff ist.

**3.** Faserverstärkte Formkörper nach Anspruch 2, dadurch gekennzeichnet, daß Fasern aus solchen aromatischen Copolyamiden eingesetzt werden, die die wiederkehrenden Struktureinheiten der Formeln III, IV und V enthalten, worin $Ar^1$ 1,4-Phenylen ist, $Ar^4$ 1,4-Phenylen oder ein zweiwertiger Rest des 4,4'-Diaminobenzanilids ist, $Ar^5$, $Ar^6$ und $Ar^7$ 1,4-Phenylen darstellen, $Ar^8$ 1,3-Phenylen bedeutet, Q -O-1,4-Phenylen-O- ist und Y -O- ist, wobei sich die Mengenanteile der wiederkehrenden Struktureinheiten der Formeln III, IV und V vorzugsweise innerhalb folgender Bereiche, bezogen auf die Gesamtmenge dieser Struktureinheiten, bewegen:
wiederkehrende Struktureinheit der Formel III: 40-60 Mol%,
wiederkehrende Struktureinheit der Formel IV: 1-20 Mol%, und
wiederkehrende Struktureinheit der Formel V: 15-40 Mol%

**4.** Faserverstärkte Formkörper nach Anspruch 2, dadurch gekennzeichnet, daß Fasern aus solchen aromatischen Copolyamiden eingesetzt werden, die die wiederkehrenden Struktureinheiten der Formeln III, IV und V enthalten, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl- methoxy- oder chlorsubstituiertens 1,4-Phenylen bedeuten, Q -O-1,4-Phenylen-O- ist und Y eine direkte C-C-Bindung ist, wobei sich die Mengenanteile der wiederkehrenden Struktureinheiten der Formeln III, IV und V vorzugsweise innerhalb folgender Bereiche, bezogen auf die Gesamtmenge dieser Struktureinheiten, bewegen:
wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

**5.** Faserverstärkte Formkörper nach Anspruch 2, dadurch gekennzeichnet, daß Fasern aus solchen aromatischen Copolyamiden eingesetzt werden, die die wiederkehrenden Struktureinheiten der Formeln III, IV und V enthalten, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl-, methoxy- oder chlorsubstituiertens 1,4-Phenylen bedeuten, Q -O- ist und Y eine direkte C-C-Bindung ist, wobei sich die Mengenanteile der wiederkehrenden Struktureinheiten der Formeln III, IV und V vorzugsweise innerhalb folgender Bereiche, bezogen auf die Gesamtmenge dieser Struktureinheiten, bewegen:
wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

**6.** Faserverstärkte Formkörper nach Anspruch 2, dadurch gekennzeichnet, daß Fasern aus solchen aromatischen Copolyamiden eingesetzt werden, die die wiederkehrenden Struktureinheiten der Formeln III und IV enthalten, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,3-Phenylen ist und Q -O- ist, wobei sich die Mengenanteile der wiederkehrenden Struktureinheiten der Formeln III und IV vorzugsweise innerhalb folgender Bereiche, bezogen auf die Gesamtmenge dieser Struktureinheiten, bewegen:
wiederkehrende Struktureinheit der Formel III: 20-50 Mol%, und
wiederkehrende Struktureinheit der Formel IV: 40-60 Mol%.

**7.** Faserverstärkte Formkörper nach Anspruch 2, dadurch gekennzeichnet, daß Fasern aus solchen aromatischen Copolyamiden eingesetzt werden, die die wiederkehrenden Struktureinheiten der Formeln III und VI enthalten, worin $Ar^1$ 1,4-Phenylen ist, $Ar^4$ 1,4-Phenylen oder ein zweiwertiger Rest des 4,4'-Diaminobenzanilids ist und X -NH- bedeutet, wobei sich die Mengenanteile der wiederkehrenden Struktureinheiten der Formeln III und VI vorzugsweise innerhalb folgender Bereiche, bezogen auf die Gesamtmenge dieser Struktureinheiten, bewegen:

wiederkehrende Struktureinheit der Formel III: 30-70 Mol%, und
wiederkehrende Struktureinheit der Formel VI: 70-30 Mol%.

**8.** Faserverstärkte Formkörper nach Anspruch 2, dadurch gekennzeichnet, daß Fasern aus solchen aromatischen Copolyamiden eingesetzt werden, die die wiederkehrenden Struktureinheiten der Formeln III, IV und VI enthalten, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,4- oder 1,3-Phenylen ist, Q -O- oder -O-1,4-Phenylen-O- bedeutet und X -NH- ist, wobei sich die Mengenanteile der wiederkehrenden Struktureinheiten der Formeln III, IV und VI dieser Struktureinheiten, bewegen:
wiederkehrende Struktureinheit der Formel III: 10-30 Mol%,
wiederkehrende Struktureinheit der Formel IV: 10-40 Mol%, und
wiederkehrende Struktureinheit der Formel VI: 50-70 Mol%.

**9.** Faserverstärkte Formkörper nach Anspruch 2, dadurch gekennzeichnet, daß Fasern aus solchen aromatischen Copolyamiden eingesetzt werden, die die wiederkehrenden Struktureinheiten der Formeln IV, V und VI enthalten, worin $Ar^1$ 1,4-Phenylen ist, $Ar^5$ 1,4-Phenylen ist, $Ar^6$ 1,4- oder 1,3-Phenylen ist, Q -O- oder -O-1,4-Phenylen-O- bedeutet, $Ar^7$ und $Ar^8$ methyl-, methoxy- oder chlorsubstituiertes 1,4-Phenylen sind, Y eine direkte C-C-Bindung bedeutet und X -NH- ist, wobei sich die Mengenanteile der wiederkehrenden Struktureinheiten der Formeln IV, V und VI vorzugsweise innerhalb folgender Bereiche, bezogen auf die Gesamtmenge dieser Struktureinheiten, bewegen:
wiederkehrende Struktureinheit der Formel IV: 10-40 Mol%,
wiederkehrende Struktureinheit der Formel V: 30-60 Mol%, und
wiederkehrende Struktureinheit der Formel VI: 50-70 Mol%.

**10.** Faserverstärkte Formkörper nach Anspruch 1, dadurch gekennzeichnet, daß die Garne oder Bänder aus Fasern bestehen, deren Einzelfilamenttiter 1 bis 20 dtex beträgt.

**11.** Faserverstärkte Formkörper nach Anspruch 1, dadurch gekennzeichnet, daß die Garne oder Bänder eine Zugfestigkeit von 150 bis 300 cN/tex aufweisen.

**12.** Faserverstärkte Formkörper nach Anspruch 1, dadurch gekennzeichnet, daß die Garne oder Bänder einen Anfangsmodul, bezogen auf 100 % Dehnung, von 20 bis 120 N/tex aufweisen.

**13.** Faserverstärkte Formkörper nach Anspruch 1, dadurch gekennzeichnet, daß die Garne oder Bänder aus Multifilamenten bestehen.

**14.** Faserverstärkte Formkörper nach Anspruch 1, dadurch gekennzeichnet, daß der Titer der Garne oder Bänder 440 bis 80000 dtex beträgt.

**15.** Faserverstärkte Formkörper nach Anspruch 1, dadurch gekennzeichnet, daß die Garne oder Bänder 2 bis 25 Gew. %, vorzugsweise 3 bis 10 Gew. %, bezogen auf das Gewicht des Garns oder des Bandes, eines duroplastischen oder thermoplastischen Polymeren als Fixierungsmittel enthalten.

**16.** Faserverstärkte Formkörper nach Anspruch 1, dadurch gekennzeichnet, daß diese Garne oder Bänder in ungedrehter Form oder mit einem Schutzdrall von bis zu 140 T/m versehen enthalten.

**17.** Faserverstärkte Formkörper nach Anspruch 1, dadurch gekennzeichnet, daß die Garne einen runden Querschnitt besitzen und Durchmesser von 0,3 bis 16 mm aufweisen.

**18.** Faserverstärkte Formkörper nach Anspruch 1, dadurch gekennzeichnet, daß die Bänder eine Dicke von etwa 0,3 bis 2 mm und eine Breite von etwa 3 bis 35 mm aufweisen.

**19.** Faserverstärkte Formkörper nach Anspruch 1, dadurch gekennzeichnet, daß diese Zemente, Mischbinder, Putz- oder Mauerbinder sowie hydraulisch erhärtende Kalke als hydraulisches Bindemittel enthalten.

**20.** Faserverstärkte Formkörper nach Anspruch 1, dadurch gekennzeichnet, daß diese Luftkalke, Baugipse, Anhydritbinder oder Magnesitbinder als Luftbindemittel enthalten.

**21.** Faserverstärkte Formkörper nach Anspruch 1, dadurch gekennzeichnet, daß diese gefüllte Werkstoffe auf der Basis von härtbaren Harzen, insbesondere von Epoxidharzen oder von ungesättigten Polyesterharzen als Polymerbeton enthalten.

**22.** Garne oder Bänder des Titers von mehr als 440 dtex aus Fasern von in polaren aprotischen organischen Lösungsmitteln löslichen aromatischen Polyamiden enthaltend die wiederkehrenden Struktureinheiten der Formeln I, II und gegebenenfalls III nach Anspruch 1, welche 2 bis 25 Gew.%, vorzugsweise 3 bis 10 Gew. %, bezogen auf das Gewicht des Garns oder des Bandes, eines duroplastischen oder thermoplastischen Polymeren als Fixierungsmittel enthalten.

**23.** Garne oder Bänder nach Anspruch 22, dadurch gekennzeichnet, daß Fasern aus solchen aromatischen Copolyamiden eingesetzt werden, die die wiederkehrenden Struktureinheiten der Formeln III und IV oder der Formeln III und VI oder der Formeln III, IV und V oder der Formeln III, IV und VI oder der Formeln IV, V und VI enthalten

$-OC-Ar^1-CO-NH-Ar^4-NH-$ (III),

$-OC-Ar^1-CO-NH-Ar^5-Q-Ar^6-NH-$ (IV),

$-OC-Ar^1-CO-NH-Ar^7-Y-Ar^8-NH-$ (V),

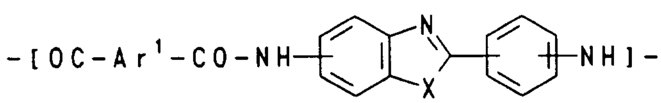 (VI),

worin $Ar^1$ und $Ar^4$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, insbesondere einkernige oder zweikernige aromatische Reste sind,
$Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellen kann, dessen freie Valenzen sich in meta-Stellung oder in einer zu dieser Stellung vergleichbaren gewinkelten Stellung zueinander befinden,
Q eine direkte C-C-Bindung oder eine Gruppe der Formel -O-, -S-, $-SO_2-$, -O-Phenylen-O- oder Alkylen ist,
$Ar^7$ und $Ar^8$ eine der für $Ar^5$ und $Ar^6$ definierten Bedeutungen annehmen,
Y eine der für Q definierten Bedeutungen annimmt oder zusätzlich eine Gruppe der Formel -HN-CO-bedeuten kann, und
X eine Gruppe der Formel -O-, -S- oder insbesondere $-NR^1-$ bedeutet, worin $R^1$ Alkyl, Cycloalkyl, Aryl, Aralkyl oder insbesondere Wasserstoff ist.

**24.** Garne oder Bänder nach Anspruch 23, dadurch gekennzeichnet, daß Fasern aus solchen aromatischen Copolyamiden eingesetzt werden, die die wiederkehrenden Struktureinheiten der Formeln III, IV und V enthalten, worin $Ar^1$ 1,4-Phenylen ist, $Ar^4$ 1,4-Phenylen oder ein zweiwertiger Rest des 4,4'-Diaminobenzanilids ist, $Ar^5$, $Ar^6$ und $Ar^7$ 1,4-Phenylen darstellen, $Ar^8$ 1,3-Phenylen bedeutet, Q -O-1,4-Phenylen-O- ist und Y -O- ist, wobei sich die Mengenanteile der wiederkehrenden Struktureinheiten der Formeln III, IV und V vorzugsweise innerhalb folgender Bereiche, bezogen auf die Gesamtmenge dieser Struktureinheiten, bewegen:
wiederkehrende Struktureinheit der Formel III: 40-60 Mol%,
wiederkehrende Struktureinheit der Formel IV: 1-20 Mol%, und
wiederkehrende Struktureinheit der Formel V: 15-40 Mol%

**25.** Garne oder Bänder nach Anspruch 23, dadurch gekennzeichnet, daß Fasern aus solchen aromatischen Copolyamiden eingesetzt werden, die die wiederkehrenden Struktureinheiten der Formeln III, IV und V enthalten, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl-, methoxy- oder chlorsubstitu-

iertens 1,4-Phenylen bedeuten, Q -O-1,4-Phenylen-O-ist und Y eine direkte C-C-Bindung ist, wobei sich die Mengenanteile der wiederkehrenden Struktureinheiten der Formeln III, IV und V vorzugsweise innerhalb folgender Bereiche, bezogen auf die Gesamtmenge dieser Struktureinheiten, bewegen:
wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

**26.** Garne oder Bänder nach Anspruch 23, dadurch gekennzeichnet, daß Fasern aus solchen aromatischen Copolyamiden eingesetzt werden, die die wiederkehrenden Struktureinheiten der Formeln III, IV und V enthalten, worin $Ar^1$ 1,4-Phenylen ist, $Ar^4$ 1,4-Phenylen oder ein zweiwertiger Rest des 4,4'-Diaminobenzanilids ist, $Ar^5$ und $Ar^6$ 1,4-Phenylen darstellen, $Ar^7$ und $Ar^8$ methyl-, methoxy- oder chlorsubstituiertens 1,4-Phenylen bedeuten, Q -O- ist und Y eine direkte C-C-Bindung ist, wobei sich die Mengenanteile der wiederkehrenden Struktureinheiten der Formeln III, IV und V vorzugsweise innerhalb folgender Bereiche, bezogen auf die Gesamtmenge dieser Struktureinheiten, bewegen:
wiederkehrende Struktureinheit der Formel III: 10-30 Mol%,
wiederkehrende Struktureinheit der Formel IV: 10-30 Mol%, und
wiederkehrende Struktureinheit der Formel V: 10-60 Mol%.

**27.** Garne oder Bänder nach Anspruch 23, dadurch gekennzeichnet, daß Fasern aus solchen aromatischen Copolyamiden eingesetzt werden, die die wiederkehrenden Struktureinheiten der Formeln III und IV enthalten, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,3-Phenylen ist und Q -O- ist, wobei sich die Mengenanteile der wiederkehrenden Struktureinheiten der Formeln III und IV vorzugsweise innerhalb folgender Bereiche, bezogen auf die Gesamtmenge dieser Struktureinheiten, bewegen:
wiederkehrende Struktureinheit der Formel III: 20-50 Mol%, und
wiederkehrende Struktureinheit der Formel IV: 40-60 Mol%.

**28.** Garne oder Bänder nach Anspruch 23, dadurch gekennzeichnet, daß Fasern aus solchen aromatischen Copolyamiden eingesetzt werden, die die wiederkehrenden Struktureinheiten der Formeln III und VI enthalten, worin $Ar^1$ 1,4-Phenylen ist, $Ar^4$ 1,4-Phenylen oder ein zweiwertiger Rest des 4,4'-Diaminobenzanilids ist und X -NH- bedeutet, wobei sich die Mengenanteile der wiederkehrenden Struktureinheiten der Formeln III und VI vorzugsweise innerhalb folgender Bereiche, bezogen auf die Gesamtmenge dieser Struktureinheiten, bewegen:
wiederkehrende Struktureinheit der Formel III: 30-70 Mol%, und
wiederkehrende Struktureinheit der Formel VI: 70-30 Mol%.

**29.** Garne oder Bänder nach Anspruch 23, dadurch gekennzeichnet, daß Fasern aus solchen aromatischen Copolyamiden eingesetzt werden, die die wiederkehrenden Struktureinheiten der Formeln III, IV und VI enthalten, worin $Ar^1$ 1,4-Phenylen ist, $Ar^4$ 1,4-Phenylen oder ein zweiwertiger Rest des 4,4'-Diaminobenzanilids ist, $Ar^5$ 1,4-Phenylen ist, $Ar^6$ 1,4- oder 1,3-Phenylen ist, Q -O- oder -O-1,4-Phenylen-O- bedeutet und X -NH- ist, wobei sich die Mengenanteile der wiederkehrenden Struktureinheiten der Formeln III, IV und VI vorzugsweise innerhalb folgender Bereiche, bezogen auf die Gesamtmenge dieser Struktureinheiten, bewegen:
wiederkehrende Struktureinheit der Formel III: 10-30 Mol%,
wiederkehrende Struktureinheit der Formel IV: 10-40 Mol %, und
wiederkehrende Struktureinheit der Formel VI: 50-70 Mol%.

**30.** Garne oder Bänder nach Anspruch 23, dadurch gekennzeichnet, daß Fasern aus solchen aromatischen Copolyamiden eingesetzt werden, die die wiederkehrenden Struktureinheiten der Formeln IV, V und VI enthalten, worin $Ar^1$ 1,4-Phenylen ist, $Ar^5$ 1,4-Phenylen ist, $Ar^6$ 1,4- oder 1,3-Phenylen ist, Q -O- oder -O-1,4-Phenylen-O- bedeutet, $Ar^7$ und $Ar^8$ methyl-, methoxy- oder chlorsubstituiertes 1,4-Phenylen sind, Y eine direkte C-C-Bindung bedeutet und X -NH- ist, wobei sich die Mengenanteile der wiederkehrenden Struktureinheiten der Formeln IV, V und VI vorzugsweise innerhalb folgender Bereiche, bezogen auf die Gesamtmenge dieser Struktureinheiten, bewegen:
wiederkehrende Struktureinheit der Formel IV: 10-40 Mol%,
wiederkehrende Struktureinheit der Formel V: 30-60 Mol%, und
wiederkehrende Struktureinheit der Formel VI: 50-70 Mol%.

**31.** Verwendung der Garne und/oder Bänder des Titers von mehr als 440 dtex aus Fasern von in polaren aprotischen organischen Lösungsmitteln löslichen aromatischen Polyamiden enthaltend die wiederkehrenden Struktureinheiten der Formeln I, II und gegebenenfalls III nach Anspruch 1 zur Verstärkung von Polymerbeton oder von hydraulisch oder an der Luft abbindenden Materialien.